(19) Europäisches Patentamt

European Patent Office

Office européen des brevets

(11) Publication number: **0 244 095 B1**

# EUROPEAN PATENT SPECIFICATION

(45) Date of publication of patent specification: **18.10.95**

(51) Int. Cl.⁶: **C04B 24/26**

(21) Application number: **87302851.8**

(22) Date of filing: **01.04.87**

The file contains technical information submitted after the application was filed and not included in this specification

(54) **Cement plasticiser compositions based on polymerisable carboxylic acids and cementiferous compositions containing them.**

(30) Priority: **03.04.86 US 847983**

(43) Date of publication of application:
**04.11.87 Bulletin 87/45**

(45) Publication of the grant of the patent:
**18.10.95 Bulletin 95/42**

(84) Designated Contracting States:
**AT BE CH DE ES FR GB GR IT LI NL SE**

(56) References cited:
EP-A- 0 069 586     EP-A- 0 097 513
CH-A- 497 351       FR-A- 1 264 052
FR-A- 1 561 560     FR-A- 2 322 111
GB-A- 1 538 103     GB-A- 2 018 737
US-A- 3 196 122     US-A- 4 229 224
US-A- 4 460 720

(73) Proprietor: **National Starch and Chemical Investment Holding Corporation**
**501 Silverside Road**
**Wilmington, Delaware 19809 (US)**

(72) Inventor: **Hoarty, John Terence**
**1 Barn Lane**
**Goldborne**
**Warrington WA3 3NR (GB)**
Inventor: **Bainbridge, Peter**
**8 St. John's Close**
**Stefen Hill Estate**
**Daventry**
**Northamptonshire NN11 4SH (GB)**
Inventor: **Montague, Peter Graham**
**15 Buccleuch Close**
**Dunchurch**
**Rugby**
**Warwickshire CV22 6OB (GB)**

(74) Representative: **Hagemann, Heinrich, Dr. rer. nat., Dipl.-Chem. et al**
**Patentanwälte**
**Hagemann & Kehl**
**Postfach 86 03 29**
**D-81630 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to cementiferous compositions and to additives for use in such compositions, which additives improve the physical characteristics such as the flow and workability of such compositions.

The cementiferous compositions with which this invention is concerned include concretes which comprises cement, coarse and fine aggregates and water; cement pastes which comprise cement and water, and mortars which comprise cement, sand and water; lime, sand and water, or mixtures containing both lime and cement. The invention is also applicable to high-pressure, steam-cured concretes comprising cement, aggregate and water; lime or limestone and siliceous materials such as silica flour and water.

The additives with which this invention is concerned are sometimes referred to as plasticisers and/or superplasticisers for concrete. Their purpose is to improve the flow characteristics of the cementiferous compositions containing them so that they may be pumped or effectively poured to fill all the spaces in a mould or other structure and yet not have their strength characteristics weakened by the inclusion of excessive amounts of air which, in certain circumstances, would be undesirable. In addition, these additives can be used to design cementiferous compositions with a reduced water content. This permits the production of concretes having higher compressive strength when cured and also adequate flow properties for certain applications.

Various additives for use in cementiferous compositions have been previously proposed, including for example, lignosulphonates and sodium naphthalene sulphonate formaldehyde condensates. Details of such materials are set out in "Chemical Admixtures for Concrete" by M R Rixom, published by E and F N Spon Limited, London, and by the Halstead Press, a division of John Wiley and Sons Incorporated of New York, USA, where, at page 34, various known additives are considered.

GB-A-1 538 103 discloses a set-inhibited calcium sulphate hemihydrate plaster, wherein a copolymer of acrylic acid or a water-soluble salt thereof having a molecular weight within 2000 to 75000 is comprised for inhibiting premature setting. The set-promoting composition for inducting the setting of the plaster comprises at least one iron, copper or aluminium salt.

In GB-A-2 018 737 there are disclosed homogeneous, uncured cementiferous compositions which comprise a hydraulic cement, water and acid copolymers having selected proportions of carboxyl groups. The polymers are said to be water-dispersible, and contain carboxyl groups in an amount of at least 50 mg KOH/gram of polymer. Preferred polymers have a molecular weight of greater than 100000.

US-A-4 460 720 reveals a cement plasticizer composition comprising alkali metal polyacrylates having a molecular weight from 500 to 25000 in combination with either an alkali or alkaline earth metal polynaphthalene sulfonate-formaldehyde condensate or a mixture of an alkali or alkaline earth metal polynaphthalene sulfonate-formaldehyde and an alkali or alkaline earth metal lignin sulfonate.

Various polymeric materials have been evaluated as plasticiser additives for cementiferous compositions and it has been found that certain polymers and their soluble salts comprising polymerisable carboxylic acids and the hydroxyalkyl esters of such acids have a definite utility in this application. Such polymers are described in European Patent specification 0097513.

The applicants have now discovered that comparable results can be obtained using more cost effective copolymers which do not contain hydroxy esters.

This invention relates to the use of a water soluble copolymer or soluble salt thereof having a molecular weight of 1,000 to 15,000 consisting essentially of:

i) about 33 to about 95 mole % of an ethylenically polymerizable carbocylic acid and

ii) from about 67 to about 5 mole % of an alkyl (C1 to C8) ester of an ethylenically polymerizable carboxylic acid

as the sole plasticizing additive in cementiferous additive compositions.

In accordance with a further embodiment of the invention, we have found that the copolymer may be further improved with respect to its use as a more cost effective plasticizer additive by the copolymerisation therein of a third ethylenically unsaturated monomer. Examples of suitable monomers are vinyl esters such as vinyl acetate and vinyl propionate; maleate and fumarate ($C_1$ to $C_8$) esters and diesters; allyl alcohol; ethylene; aromatic vinyl compounds such as styrene; vinyl alcohol (obtained by hydrolyzing a vinyl acetate based polymer); and mixtures thereof. Surprisingly, the addition of this third monomer, while substantially lowering the cost of the polymer, has been found to have little or no deleterious effect upon the efficiency of the polymer as a plasticiser, even when added at levels as high as bout 50% by weight of the copolymer.

Thus, the invention also relates to a Plasticizer additive specifically adapted for use in a cementiferous composition, said additive consisting essentially of an aqueous solution of a polymer or soluble salt thereof having a molecular weight of 1,000 to 15,000 consisting essentially of:

i) from 45 to 90 mole % of an ethylenically unsaturated carboxylic acid;

2

ii) from 5 to 50 mole % of an alkyl (C1 to C8) ester of an ethylenically unsaturated carboxy acid; and

iii) from 5 to 50 mole % of a third ethylenically unsaturated comonomer selected from the group consisting of vinyl esters, maleate and fumerate (C1 to C8) esters and diesters, allyl alcohol, ethylene, aromatic vinyl compounds, vinyl alcohol and mixtures thereof.

The cementiferous composition will preferably contain from about 0.01% to about 2.5% by weight of the copolymer with respect to the cement component.

In accordance with a further aspect of this invention, there is provided a plasticiser additive composition comprising an aqueous solution of a copolymer on soluble salt thereof comprising from about 45 to 90 mole % of the ethylenically polymerisable carboxylic acid and from about 5 to about 50 mole % of the ester.

The plasticiser additive may also contain 5 to 50 mole % of a third ethylencially comonomer as described above.

These plasticiser additives may contain anti-foaming agents or air entraining agents, accelerators and other components conventional in the art. These additives, if present, are employed in effective amounts, for example anti-foaming agents are generally used in the range of about 0.1 to 2% by weight of the copolymer of salt thereof. Suitable anti-foaming agents include tributylphosphates, dibutyl phthalate, various water insoluble alcohols and silicone derivatives. Suitable accelerators include, for example, sodium thiocyanate and triethanolamine, used generally at levels of about 15 to 35% by weight of the copolymer.

The invention also includes a process for making cementiferous composition wherein the plasticiser additive defined is added to the composition components during mixing.

The ethylenically unsaturated carboxylic acids suitable for use herein include acrylic, maleic, methacrylic, crotonic, fumaric, itaconic, citraconic and aconitic acids and mixtures thereof. However the acids are not restricted to being mono or dicarboxylic. Acrylic, maleic and methacrylic acids are preferred. The preferred esters are the methyl, ethyl, propyl and butyl derivatives. Preferred copolymers are those of acrylic acid with ethyl acrylate or methyl methylacrylate with the copolymer of acrylic acid and methyl methacrylate being most preferred.

As noted previously, in the broadest scope of the invention, the mole percentage of the acid in the copolymer is 33 to 95%, preferably 60 to 85% with the ester comprising the remainder of the polymer.

In the embodiment wherein a third ethylenically unsaturated comonomer is present, the acid is used in amount of 45 to 90 mole %, preferably 60 to 80%, the ester in an amount of 5 to 50 mole %, preferably 10 to 30, and the third comonomer is an amount of 5 to 50 mole %, preferably 10 to 30%.

Suitable polymers may be made by the copolymerization of the alkyl ester with the ethylenically unsaturated acid and, optionally the third monomer, using methods known in polymerisation technology. The resultant copolymer or terpolymer may be neutralised with a suitable base such as sodium hydroxide or other soluble base to form a soluble salt and diluted with water to the required concentration for use in the cementiferous compositions and plasticiser additives provided by this invention. Representative salt cations are preferably alkali metal, eg. sodium, potassium, alkaline earth metals eg. calcium, magnesium, organic bases, eg. amines and their derivatives, and ammonia.

Absolute molecular weights of the polymers of this invention have not been determined. However, apparent molecular weights as calculated relative to sodium polyacrylate standards have been determined using gel permeation chromatography. The apparent molecular weight of the copolymer is within the range of 1000 to 15000, preferably 1000 to 9000.

Precise molecular weights have not been determined for all the copolymers used but in some cases viscosity determinations have been carried out. The preferred viscosity is less than 30 cps as a 15% by weight aqueous solution in 1 molar NaCl as measured by a Brookfield viscometer model LVT with UV adaptor at 65 rpm and 25°C.

The water soluble copolymer or salt thereof is used as a plasticiser additive in cementiferous compositions in amount of 0.01 to 2.5% by weight, preferably 0.03 to 2.0%.

Examples

Examples of sodium salts of the copolymers and terpolymers and their application in cementiferous compositions will now be given to illustrate but not limit the invention.

The cement mix used in the tests had the composition:

# EP 0 244 095 B1

| Portland cement | 350 Kg/m$^3$ |
|---|---|
| gravel (20 mm) | 780 Kg/m$^3$ |
| gravel (10 mm) | 330 Kg/m$^3$ |
| sand | 700 Kg/m$^3$ |
| water/cement ratio | 0.57 |

The aggregate (gravels and sand) was placed in a mixer with half the water and mixed for 30 seconds. After standing for 1 minute the mixer was restarted and the cement component added over 30 seconds. The remainder of the water was then added and mixing continued for a further 2 minutes. The plasticiser polymer admixture (if present) was then added at a level of 0.12% by weight, ie as 0.4% w/w of 30% w/w solution, of cement component and the whole mixed for a further 1 minute.

The cementitious compositions prepared were tested for slump, plastic density, compressive strength and setting time according to British Standard 1881. The flow properties were tested by the method of DIN 1048.

Twelve copolymers and terpolymers were prepared and tested as their sodium salts against a copolymer sodium salt disclosed in European patent specification 0097513 as standard. Appropriate measurements were also made on the two base cementiferous compositions not containing an admixture. The twelve examples and standard copolymer had the compositions set out in Table I.

The sodium salts of the polymers were prepared at 30% w/w solutions and 0.25% w/w tributyl phosphate added as anti-foamer. These admixtures were tested at a level of 0.4% w/w of cement using two cement bases indicated as Base 1 and Base 2 in Table II. This Table quotes the properties of the cementiferous compositions prepared. It will be seen that the copolymers of the invention improve the properties of the cement bases and are as effective as known more expensive hydroxy ester containing polymers.

<div align="center"><u>TABLE I</u></div>

|  | A | B | C* | E | F | G | H | J** | K** | L | N | P | R |
|---|---|---|---|---|---|---|---|---|---|---|---|---|---|
| <u>Admixture</u> |  |  |  |  |  |  |  |  |  |  |  |  |  |
| Component (mole%) |  |  |  |  |  |  |  |  |  |  |  |  |  |
| Acrylic acid | 60 | 85 | 70 | 90 | 95 |  | 85 | 56 | 46 | 56 | 65 | 56 | 63 |
| Methyl methacrylate | 40 | 15 |  | 10 | 5 | 15 |  | 22 | 8 | 22 | 20 | 22 | 24 |
| Methacrylic acid |  |  |  |  |  | 85 |  |  |  |  |  |  |  |
| Ethyl acrylate |  |  |  |  |  |  | 15 |  |  |  |  |  |  |
| Vinyl alcohol |  |  |  |  |  |  |  | 22 | 46 |  |  |  |  |
| Vinyl acetate |  |  |  |  |  |  |  |  |  | 22 | 15 |  |  |
| Allyl alcohol |  |  |  |  |  |  |  |  |  |  |  | 22 |  |
| Styrene |  |  |  |  |  |  |  |  |  |  |  |  | 13 |
| Hydroxy propyl methyacrylate |  |  | 30 |  |  |  |  |  |  |  |  |  |  |
| viscosity $10^{-3}$ Pa·s (cps) | 15.0 | 8.0 | 5.5 | 9.7 | 8.0 | 18.0 | 8.5 | 7.7 | 11.2 | 13.5 | 8.6 | 10.3 | NM |

*standard copolymer

** these polymers were prepared by hydrolysis of acrylic acid/vinyl acetate/methyl methacrylate terpolymers.

NM - not measured

EP 0 244 095 B1

## TABLE II

| Admixture | Slump (mm) | Plastic Density | Flow Before tamping | Flow After | Setting time (h) $34 .10^5 N/m^2$ (500 psi) | $275$ (4000 psi) | time to return to 50 mm slump (h) | Compressive strength (N/mm²) 1 day | 7 days | 28 days |
|---|---|---|---|---|---|---|---|---|---|---|
| Base 1 | 55 | 2390 | 20 | Sheared | 4.3 | 5.8 | NM | 11.9 | 34.0 | NM |
| A | | 2410 | 36 | 64 | 7.0 | 8.7 | 3.75 | 9.4 | 33.0 | NM |
| B | | 2400 | 35 | 63 | 7.4 | 9.4 | 3.50 | 9.5 | 36.5 | NM |
| C* | | 2410 | 36 | 64 | 7.2 | 9.4 | 3.75 | 9.5 | 35.5 | NM |
| J | | 2405 | 32 | 62 | 6.7 | 8.5 | 1.40 | 11.5 | 36.0 | NM |
| K | | 2400 | 32 | 61 | 7.0 | 8.7 | 1.10 | 12.3 | 35.0 | NM |
| L | | 2400 | 34 | 63 | 7.7 | 9.0 | 3.60 | 11.0 | 36.0 | NM |

TABLE II (CONT.)

| Property Admixture | Slump (mm) | Plastic Density | Flow Before tampering | Flow After | Setting time(h) $34.5 \cdot 10^5$ N/m² (500 psi) | Setting time(h) 275 (4000 psi) | time to return to 50 mm slump (h) | Compressive strength (N/mm²) 1 day | 7 days | 28 days |
|---|---|---|---|---|---|---|---|---|---|---|
| Base 2 | 50 | 2400 | 20 | Sheared | NM | NM | NM | 16.1 | NM | 47.0 |
| C* | | 2410 | 36 | 62 | NM | NM | NM | 15.3 | NM | 48.0 |
| E | | 2420 | 32 | 61 | NM | NM | NM | 14.4 | NM | 46.8 |
| F | | 2420 | 33 | 60 | NM | NM | NM | 14.1 | NM | 45.6 |
| G | | 2415 | 35 | 61 | NM | NM | NM | 15.8 | NM | 47.5 |
| H | | 2405 | 29 | 58 | NM | NM | NM | 14.6 | NM | 47.5 |
| N | | 2400 | 37 | 64 | NM | NM | NM | 15.1 | NM | 49.5 |
| P | | 2410 | 30 | 56 | NM | NM | NM | 15.6 | NM | 47.0 |
| R | | 2400 | 31 | 58 | NM | NM | NM | 12.3 | NM | 42.5 |

NM - not measured. 'Sheared' indicates the cement did not flow properly so an accurate measurement could not be made.

## Claims

1. Use of a Water soluble copolymer or soluble salt thereof having a molecular weight of 1,000 to 15,000 consisting essentially of:

7

i) about 33 to about 95 mole % of an ethylenically polymerizable carboxylic acid and

ii) from about 67 to about 5 mole % of an alkyl ($C_1$ to $C_8$) ester of an ethylenically polymerizable carboxylic acid

as the sole plasticizing additive in cementiferous additive compositions

2. Use of the water soluble copolymer or soluble salt thereof according to claim 1 wherein the salt cations are selected from alkali metal, preferably sodium, potassium, alkaline earth metals preferably calcium, magnesium, organic bases, preferably amines and their derivatives, and ammonia.

3. Use of the water soluble copoylmer or soluble salt thereof according to claim 1 or 2 wherein the copolymer or salt is used in an amount from about 0,01 % to about 2,5% by weight with respect to the cement component.

4. Use of the water soluble copoylmer or soluble salt thereof according to any preceding claim wherein the acids defined in paras (i) and (ii) are selected from acrylic, maleic, methacrylic, crotonic, fumaric, itaconic, citraconic and aconitic acids and mixtures thereof.

5. Use of the water soluble copoylmer or soluble salt thereof according to any preceding claim wherein the esters of para (ii) are selected from the methyl, ethyl, propyl and butyl derivatives.

6. Use of the water soluble copoylmer or soluble salt thereof according to any preceding claim wherein the copolymers are those of acrylic acid with ethyl acrylate or acrylic acid with methyl methacrylate.

7. Cementiferous compositions comprising, as a plasticizer additive, a water soluble polymer or soluble salt thereof having a molecular weight of 1,000 to 15,000 consisting essentially of

i) from about 45 to 90 mole % of an ethylenically polymerizable carboxylic acid,

ii) from about 5 to about 50 mole % of an alkyl ($C_1$ to $C_8$) ester of an ethylenically unsaturated carboxylic acid, and

iii) from about 5 to about 50 mole % of a third ethylenically unsaturated comonomer selected from the group consisting of vinyl esters, maleate and fumerate ($C_1$ to $C_8$) esters and diesters, allyl alcohol, ethylene, aromatic vinyl compounds, vinyl alcohol and mixtures thereof.

8. Compositions according to claim 7 wherein the third monomer is vinyl acetate, allyl alcohol, vinyl alcohol, styrene and mixtures thereof.

9. Composition according to claim 7 or 8, wherein the salt cations are selected from alkali metal, preferably sodium, potassium, alkaline earth metals preferably calcium, magnesium, organic bases, preferably amines and their derivatives, and ammonia.

10. Compositions according to claim 7, 8 or 9 containing from about 0.01 % to about 2.5 % by weight of the copolymer or salt with respect to the cement component.

11. Compositions according to any of claims 7 to 10 wherein the acids defined in paras (i) and (ii) are selected from acrylic, maleic, methacrylic, crotonic, fumaric, itaconic, citraconic and aconitic acids and mixtures thereof.

12. Compositions according to any of claims 7 to 11 wherein the esters of para (ii) are selected from the methyl, ethyl, propyl and butyl derivatives.

13. Compositions according to any of claims 7 to 12 wherein the copolymers are those of acrylic acid with ethyl acrylate or acrylic acid with methyl methacrylate.

14. Use of a plasticizer additive as the sole plasticizing additive in a cementiferous composition, said additive consisting essentially of an aqueous solution of a copolymer, or soluble salt thereof, having a molecular weight of 1,000 to 15,000 consisting essentially of:

i) about 33 to 95 mole % of an ethylenically polymerizable carboxylic acid and

ii) from 67 to 5 mole % of an alkyl ($C_1$ to $C_8$) ester of an ethylenically polymerizable carboxylic acid.

15. Use of a plasticiser additive according to claim 14 where there is additionally present an effective amount of anti-foaming agent.

16. Use of a plasticizer additive according to claim 15 wherein the anti-foaming agent is selected from the group tributyl phosphates, dibutyl phthalate, water-insoluble alcohols and silicone derivatives.

17. Use of a plasticizer additive according to claim 14, 15 or 16 wherein the amount of anti-foaming agent in the composition is in the range of 0.1 % to 2.0 % by weight of the copolymer or salt thereof.

18. Use of a plasticizer additive according to any of claims 14 to 17 wherein there is additionally present an accelerator.

19. Use of a plasticizer additive according to claim 18 wherein the accelerator is sodium thiocyanate or triethanolamine.

20. Use of a plasticizer additive according to claim 18 or 19 wherein the accelerator is present in an amount of 15 to 35 % by weight of the copolymer.

21. A plasticizer additive specifically adapted for use in a cementiferous composition, said additive consisting essentially of an aqueous solution of a polymer or soluble salt thereof having a molecular weight of 1,000 to 15,000 consisting essentially of:
    i) from 45 to 90 mole % of an ethylenically unsaturated carboxylic acid;
    ii) from 5 to 50 mole % of an alkyl ($C_1$ to $C_8$) ester of an ethylenically unsaturated carboxylic acid; and
    iii) from 5 to 50 mole % of a third ethylenically unsaturated comonomer selected from the group consisting of vinyl esters, maleate and fumerate ($C_1$ to $C_8$) esters and diesters, allyl alcohol, ethylene, aromatic vinyl compounds, vinyl alcohol and mixtures thereof.

22. A plasticizer additive according to claim 21 where there is additionally present an effective amount of anti-foaming agent.

23. A plasticizer additive according to claim 22 wherein the anti-foaming agent is selected from the group tributyl phosphates, dibutyl phthalate, water-insoluble alcohols and silicone derivatives.

24. A plasticizer additive according to claim 21, 22 or 23 wherein the amount of antifoaming agent in the composition is in the range of 0.1 % to 2.0 % by weight of the copolymer or salt thereof.

25. A plasticizer additive according to any of claims 21 to 24 wherein there is additionally present an accelerator.

26. A plasticizer additive according to claim 25 wherein the accelerator is sodium thiocyanate or triethanolamine.

27. A plasticizer additive according to claim 25 or 26 wherein the accelerator is present in an amount of 15 to 35 % by weight of the copolymer.

28. A process for the preparation of a plasticized cementiferous composition comprising adding to a cementiferous material a plasticiser additive as claimed in any of claims 21 to 27.

**Patentansprüche**

1. Verwendung eines wasserlöslichen Copolymers oder löslichen Salzes davon mit einem Molekulargewicht von 1.000 bis 15.000, bestehend im wesentlichen aus:
    i) etwa 33 bis etwa 95 Mol-% einer ethylenisch polymerisierbaren Carbonsäure und
    ii) etwa 67 bis etwa 5 Mol-% eines $C_1$-$C_8$-Alkylesters einer ethylenisch polymerisierbaren Carbonsäure als das einzige Plastifzierungsadditiv in Additivzusammensetzungen für zementhaltige Materialien.

9

2. Verwendung des wasserlöslichen Copolymers oder löslichen Salzes davon nach Anspruch 1, bei der die Salzkationen aus Alkalimetallen, vorzugsweise Natrium, Kalium, Erdalkalimetallen, vorzugsweise Calcium, Magnesium, organischen Basen, vorzugsweise Aminen und deren Derivaten, und Ammoniak ausgewählt sind.

3. Verwendung des wasserlöslichen Copolymers oder löslichen Salzes davon nach Anspruch 1 oder 2, bei der das Copolymer oder das Salz in einer Menge von etwa 0,01 Gew.-% bis etwa 2,5 Gew.-%, bezogen auf die Zementkomponente, verwendet wird.

4. Verwendung des wasserlöslichen Copolymers oder löslichen Salzes davon nach einem der vorstehenden Ansprüche, bei der die in Absatz i) und Ansatz ii) definierten Säuren aus Acrylsäure, Maleinsäure, Methacrylsäure, Crotonsäure, Fumarsäure, Itaconsäure, Citraconsäure und Aconitsäure und Mischungen davon ausgewählt sind.

5. Verwendung des wasserlöslichen Copolymers oder löslichen Salzes davon nach einem der vorstehenden Ansprüche, bei der die Ester von Absatz ii) aus den Methyl-, Ethyl-, Propyl- und Butylderivaten ausgewählt sind.

6. Verwendung des wasserlöslichen Copolymers oder löslichen Salzes davon nach einem der vorstehenden Ansprüche, bei der die Copolymere diejenigen von Acrysäure mit Ethylacrylat oder Acrylsäure mit Methylmethacrylat sind.

7. Zementhaltige Zusammensetzungen, umfassend als Plastifizierungsadditiv ein wasserlösliches Polymer oder lösliches Salz davon mit einem Molekulargewicht von 1.000 bis 15.000, welches im wesentlichen besteht aus
i) etwa 45 bis 90 % einer ethylenisch polymerisierbaren Carbonsäure,
ii) etwa 5 bis etwa 50 Mol-% eines $C_1$-$C_8$-Alkylesters einer ethylenisch ungesättigten Carbonsäure und
iii) etwa 5 bis etwa 50 Mol-% eines dritten ethylenisch ungesättigten Comonomers, ausgewählt aus der Gruppe, bestehend aus Vinylestern, Maleat- und Fumarat-$C_1$-$C_8$-estern und -diestern, Allylalkohol, Ethylen, aromatischen Vinylverbindungen, Vinylalkohol und Mischungen davon.

8. Zusammensetzungen nach Anspruch 7, bei denen das dritte Monomer Vinylacetat, Allylalkohol, Vinylalkohol, Styrol und Mischungen davon ist.

9. Zusammensetzung nach Anspruch 7 oder 8, bei der die Salzkationen aus Alkalimetallen, vorzugsweise Natrium, Kalium, Erdalkalimetallen, vorzugsweise Calcium, Magnesium, organischen Basen, vorzugsweisen Aminen und deren Derivaten, und Ammoniak ausgewählt sind.

10. Zusammensetzungen nach Anspruch 7, 8 oder 9, welche etwa 0,01% bis etwa 2,5 Gew.-% Copolymer oder Salz, bezogen auf die Zementkomponente, enthalten.

11. Zusammensetzungen nach einem der Ansprüche 7 bis 10, bei denen die in Ansatz i) und Ansatz ii) definierten Säuren aus Acrylsäure, Maleinsäure, Methacrylsäure, Crotonsäure, Fumarsäure, Itaconsäure, Citraconsäure und Aconitsäure und Mischungen davon ausgewählt sind.

12. Zusammensetzungen nach einem der Ansprüche 7 bis 11, bei denen die Ester von Absatz ii) aus den Methyl-, Ethyl-, Propyl- und Butylderivaten ausgewählt sind.

13. Zusammensetzungen nach einem der Ansprüche 7 bis 12, bei denen die Copolymere diejenigen von Acrylsäure mit Ethylacrylat oder Acrylsäure mit Methylmethacrylat sind.

14. Verwendung eines Plastifizierungsadditivs als einziges Plastifizierungsadditiv in einer zementhaltigen Zusammensetzung, wobei das Additiv im wesentlichen aus einer wäßrigen Lösung eines Copolymers oder löslichen Salzes davon mit einem Molekulargewicht von 1.000 bis 15.000 besteht, welches im wesentlichen besteht aus:
i) etwa 33 bis 95 Mol-% einer ethylenisch polymerisierbaren Carbonsäure und
ii) 67 bis 5 Mol-% eines $C_1$-$C_8$-Alkylesters einer ethylenisch polymerisierbaren Carbonsäure.

**15.** Verwendung eines Plastifizierungsadditivs nach Anspruch 14, wobei zusätzlich eine wirksame Menge eines Schaumverhütungsmittels vorliegt.

**16.** Verwendung eines Plastifizierungsadditivs nach Anspruch 15, bei der das Schaumverhütungsmittel aus der Gruppe von Tributylphosphaten, Dibutylphthalat, wasserunlöslichen Alkoholen und Siliconderivaten ausgewählt ist.

**17.** Verwendung eines Plastifizierungsadditivs nach Anspruch 14, 15 oder 16, bei der die Menge des Schaumverhütungsmittels in der Zusammensetzung im Bereich von 0,1 Gew.-% bis 2,5 Gew.-%, bezogen auf das Copolymer oder Salz davon, beträgt.

**18.** Verwendung eines Plastifizierungsadditivs nach einem der Ansprüche 14 bis 17, bei der zusätzlich ein Beschleuniger vorliegt.

**19.** Verwendung eines Plastifizierungsadditivs nach Anspruch 18, bei der der Beschleuniger Natriumthiocyanat oder Triethanolamin ist.

**20.** Verwendung eines Plastifizierungsadditivs nach Anspruch 18 oder 19, bei der der Beschleuniger in einer Menge von 15 bis 35 Gew.-%, bezogen auf das Copolymer, vorliegt.

**21.** Plastifizierungsadditiv, welches speziell für die Verwendung in einer zementhaltigen Zusammensetzung angepaßt ist, wobei das Additiv im wesentlichen aus einer wäßrigen Lösung eines Polymers oder löslichen Salzes davon mit einem Molekulargewicht von 1.000 bis 15.000 besteht, welches im wesentlichen besteht aus:
    i) 45 bis 90 Mol-% einer ethylenisch ungesättigten Carbonsäure,
    ii) 5 bis 50 Mol-% eines $C_1$-$C_8$-Alkylesters einer ethylenisch ungesättigten Carbonsäure und
    iii) 5 bis 50 Mol-% eines dritten ethylenisch ungesättigten Comonomers, ausgewählt aus der Gruppe, bestehend aus Vinylestern, Maleat- und Fumarat-$C_1$-$C_8$-estern und -diestern, Allylalkohol, Ethylen, aromatischen Vinylverbindungen, Vinylalkohol und Mischungen davon.

**22.** Plastifizierungsadditiv nach Anspruch 21, wobei zusätzlich eine wirksame Menge eines Schaumverhütungsmittels vorliegt.

**23.** Plastifizierungsadditiv nach Anspruch 22, bei dem das Schaumverhütungsmittel aus der Gruppe von Tributylphosphaten, Dibutylphthalat, wasserunlöslichen Alkoholen und Siliconderivaten ausgewählt ist.

**24.** Plastifizierungsadditiv nach Anspruch 21, 22, oder 23, bei dem die Menge des Schaumverhütungsmittels in der Zusammensetzung im Bereich von 0,1 Gew.-% bis 2,0 Gew.-%, bezogen auf das Copolymer oder Salz davon, vorliegt.

**25.** Plastifizierungsadditiv nach einem der Ansprüche 21 bis 24, bei dem zusätzlich ein Beschleuniger vorliegt.

**26.** Plastifizierungsadditiv nach Anspruch 25, bei dem der Beschleuniger Natriumthiocyanat oder Triethanolamin ist.

**27.** Plastifizierungsadditiv nach Anspruch 25 oder 26, bei dem der Beschleuniger in einer Menge von 15 bis 35 Gew.-%, bezogen auf das Copolymer, vorliegt.

**28.** Verfahren zur Herstellung einer plastifizierten zementhaltigen Zusammensetzung, das die Zugabe eines Plastifizierungsadditivs nach einem der Ansprüche 21 bis 27 zu einem zementhaltigen Material umfaßt.

**Revendications**

**1.** Utilisation d'un copolymère hydrosoluble ou d'un de ses sels solubles ayant un poids moléculaire de 1000 à 15 000, consistant essentiellement en
    i) environ 33 à environ 95 moles % d'un acide carboxylique à polymérisation éthylénique, et

ii) environ 67 à environ 5 moles % d'un ester alkylique (en $C_1$ à $C_8$) d'un acide carboxylique à polymérisation éthylénique,
comme seul additif plastifiant dans des compositions d'additifs pour ciments.

2. Utilisation du copolymère hydrosoluble ou de son sel soluble suivant la revendication 1, dans laquelle les cations du sel sont choisis entre des métaux alcalins, de préférence le sodium et le potassium, des métaux alcalinoterreux, de préférence le calcium et le magnésium, des bases organiques, de préférence des amines et leurs dérivés, et l'ammoniac.

3. Utilisation du copolymère hydrosoluble ou de son sel soluble suivant la revendication 1 ou 2, dans laquelle le copolymère ou le sel est utilisé en une quantité d'environ 0,01 % à environ 2,5 % en poids par rapport au ciment.

4. Utilisation du copolymère hydrosoluble ou de son sel soluble suivant l'une quelconque des revendications précédentes, dans laquelle les acides définis dans les paragraphes (i) et (ii) sont choisis entre les acides acrylique, maléique, méthacrylique, crotonique, fumarique, itaconique, citraconique et aconitique ainsi que leurs mélanges.

5. Utilisation du copolymère hydrosoluble ou de son sel soluble suivant l'une quelconque des revendications précédentes, dans laquelle les esters du paragraphe (ii) sont choisis entre les dérivés méthyliques, éthyliques, propyliques et butyliques.

6. Utilisation du copolymère hydrosoluble ou de son sel soluble suivant l'une quelconque des revendications précédentes, dans laquelle les copolymères sont des copolymères d'acide acrylique avec l'acrylate d'éthyle ou d'acide acrylique avec le méthacrylate de méthyle.

7. Compositions à base de ciment comprenant, comme additif plastifiant, un polymère hydrosoluble ou son sel soluble ayant un poids moléculaire de 1000 à 15 000, consistant essentiellement en
   i) 45 à 90 moles % d'un acide carboxylique à insaturation éthylénique, et
   ii) 5 à 50 moles % d'un ester alkylique (en $C_1$ à $C_8$) d'un acide carboxylique à insaturation éthylénique ; et
   iii) 5 à 50 moles % d'un troisième comonomère à insaturation éthylénique choisi dans le groupe consistant en esters vinyliques, esters et diesters maléiques et fumariques ($C_1$ à $C_8$), alcool allylique, éthylène, composés vinyliques aromatiques, alcool vinylique et leurs mélanges.

8. Compositions suivant la revendication 7, dans lesquelles le troisième monomère est l'acétate de vinyle, l'alcool allylique, l'alcool vinylique, le styrène ou un de leurs mélanges.

9. Composition suivant la revendication 7 ou 8, dans laquelle les cations du sel sont choisis entre des métaux alcalins, de préférence le sodium et le potassium, des métaux alcalino-terreux, de préférence le calcium et le magnésium, des bases organiques, de préférence des amines et leurs dérivés, et l'ammoniac.

10. Compositions suivant la revendication 7, 8 ou 9, contenant environ 0,01 % à environ 2,5 % en poids du copolymère ou sel, par rapport au ciment.

11. Compositions suivant l'une quelconque des revendications 7 à 10, dans lesquelles les acides définis dans les paragraphes (i) et (ii) sont choisis entre les acides acrylique, maléique, méthacrylique, crotonique, fumarique, itaconique, citraconique et aconitique ainsi que leurs mélanges.

12. Compositions suivant l'une quelconque des revendications 7 à 11, dans lesquelles les esters du paragraphe (ii) sont choisis entre les dérivés méthyliques, éthyliques, propyliques et butyliques.

13. Compositions suivant l'une quelconque des revendications 7 à 12, dans lesquelles les copolymères sont des copolymères d'acide acrylique avec l'acrylate d'éthyle ou des copolymères d'acide acrylique avec le méthacrylate de méthyle.

**14.** Utilisation d'un additif plastifiant comme seul additif plastifiant dans une composition à base de ciment, ledit additif consistant essentiellement en une solution aqueuse d'un copolymère, ou d'un de ses sels solubles, ayant un poids moléculaire de 1000 à 15 000, consistant essentiellement en

i) environ 33 à environ 95 moles % d'un acide carboxylique à polymérisation éthylénique, et

ii) 67 à 5 moles % d'un ester alkylique (en $C_1$ à $C_8$) d'un acide carboxylique à polymérisation éthylénique.

**15.** Utilisation d'un additif plastifiant suivant la revendication 14, dans laquelle est présent en outre une quantité efficace d'un agent anti-mousse.

**16.** Utilisation d'un additif plastifiant suivant la revendication 15, dans laquelle l'agent anti-mousse est choisi dans le groupe consistant en phosphates de tributyle, phtalate de dibutyle, alcools insolubles dans l'eau et dérivés de silicones.

**17.** Utilisation d'un additif plastifiant suivant la revendication 14, 15 ou 16, dans laquelle la quantité d'agent anti-mousse dans la composition est comprise dans l'intervalle de 0,1 % à 2,0 % en poids du copolymère ou de son sel.

**18.** Utilisation d'un additif plastifiant suivant l'une quelconque des revendications 14 à 17, dans laquelle est présent en outre un accélérateur.

**19.** Utilisation d'un additif plastifiant suivant la revendication 18, dans laquelle l'accélérateur est le thiocyanate de sodium ou la triéthanolamine.

**20.** Utilisation d'un additif plastifiant suivant la revendication 18 ou 19, dans laquelle l'accélérateur est présent en une quantité de 15 à 35 % en poids du copolymère.

**21.** Additif plastifiant adapté spécifiquement à une utilisation dans une composition à base de ciment, ledit additif consistant essentiellement en une solution aqueuse d'un polymère ou d'un de ses sels solubles ayant un poids moléculaire de 1000 à 15 000, consistant essentiellement en :

i) 45 à 90 moles % d'un acide carboxylique à insaturation éthylénique,

ii) 5 à 50 moles % d'un ester alkylique (en $C_1$ à $C_8$) d'un acide carboxylique à insaturation éthylénique ; et

iii) 5 à 50 moles % d'un troisième comonomère à insaturation éthylénique choisi dans le groupe consistant en esters vinyliques, esters et diesters maléiques et fumariques ($C_1$ à $C_8$), alcool allylique, éthylène, composés vinyliques aromatiques, alcool vinylique et leurs mélanges.

**22.** Additif plastifiant suivant la revendication 21, dans lequel est présente en outre une quantité efficace d'un agent anti-mousse.

**23.** Additif plastifiant suivant la revendication 22, dans lequel l'agent anti-mousse est choisi dans le groupe consistant en phosphates de tributyle, phtalate de dibutyle, alcools insolubles dans l'eau et dérivés de silicones.

**24.** Additif plastifiant suivant les revendications 21, 22 ou 23, dans lequel la quantité d'agent antimousse dans la composition est comprise dans l'intervalle de 0,1 % à 2,0 % en poids du copolymère ou de son sel.

**25.** Additif plastifiant suivant l'une quelconque des revendications 21 à 24, dans lequel est présent en outre un accélérateur.

**26.** Additif plastifiant suivant la revendication 25, dans lequel l'accélérateur est le thiocyanate de sodium ou la triéthanolamine.

**27.** Additif plastifiant suivant la revendication 25 ou 26, dans lequel l'accélérateur est présent en une quantité de 15 à 35 % en poids du copolymère.

**28.** Procédé de préparation d'une composition de ciment plastifiée, comprenant l'addition à une matière à base de ciment d'un additif plastifiant suivant l'une quelconque des revendications 21 à 27.